# EUROPEAN PATENT APPLICATION

(11) **EP 1 577 697 A1**
(43) Date of publication of application: **21.09.2005**
(21) Application number: 03786342.0
(22) Date of filing: 25.12.2003
(51) Int. Cl.: G02B 27/00, G02B 27/18, G02B 27/28

(54) **ILLUMINATING DEVICE AND PORJECTION TYPE IMAGE DISPLAY UNIT**

(30) Priority: 26.12.2002 JP 2002377870; 26.12.2002 JP 2002377871; 26.12.2002 JP 2002377872; 27.12.2002 JP 2002379014
(71) Applicant: SANYO ELECTRIC CO., LTD., Osaka 570-8677 (JP)
(72) Inventor: TERADA, Fusao, Ota-shi, Gunma 373-0827 (JP); TORAZAWA, Kenji, Ogaki-shi, Gifu 503-0805 (JP); FUNAZOU, Yasuo, Kitakatsuragi-gun, Nara 636-0073 (JP); TSUCHIYA, Yoichi, Hashima-shi, Gifu 501-6203 (JP); HIBINO, Katsutoshi, Kaizu-gun, Gifu 503-0407 (JP); KANAYAMA, Hideyuki, Uji-shi, Kyoto 611-0011 (JP); YOSHII, Shouichi, Habikino-shi, Osaka 583-0851 (JP); KUROSAKA, Yoshitaka, Daito-shi, Osaka 574-0062 (JP)
(74) Representative: Read, Matthew Charles
(86) International application number: PCT/JP2003/016836
(87) International publication number: WO 2004/059366

(57) **Abstract**

An illuminating device (1) is formed of a light source (12) in which LED chips (11) are arranged in an array shape and lens cells (14) are arranged on a light-emission side of each of the LED chips (11), and a pair of fly's eye lenses (13) that integrates and guides to a liquid crystal panel (3) the light emitted from each of the LED chips (11) and collimated by the lens cells (14). The LED chip (11) and the lens cell (14) are formed in a square shape, and an aspect ratio thereof corresponds to that of the liquid crystal display panel (3). In addition, the lens cells (14) are arranged separately from one another in such a manner to have wall surfaces (air gaps), and the wall surfaces serve as reflective surfaces.

## Description

### TECHNICAL FIELD

The present invention relates to an illuminating device and a projection type video display.

### PRIOR ART

Generally, an illuminating device used for a liquid crystal projector, and others is formed of a lamp such as an ultra-high pressure mercury lamp, a metal halide lamp, a xenon lamp, and etc., and a parabolic reflector that collimates irradiating light. In addition, in such the illuminating device, in order to reduce a non-uniformity of a light amount on an irradiating surface, there is an integrating function by a pair of fly's eye lenses (referred to as a function for superimposing and converging plural illuminating areas of predetermined shape formed by sampling within a plane surface by an optical device on an object to be illuminated). Furthermore, in recent years, from the viewpoint of reduction in size and weight, it is attempted to use a light-emitting diode (LED) as the light source (see Japanese Patent Application Laying-open No.H10-186507).

However, in reality, a practical illuminating device using the light-emitting diode has not been obtained.

Furthermore, instead of the light-emitting diode, a laser diode (LD) may be used. However, in a case of using a plurality of laser diodes which emit light of the same wavelength, there is a disadvantage that a speckle noise (a high-contrast speckle pattern generated in a space when a rough surface or a heterogeneous medium is irradiated with light having greatly high-coherency like a laser beam and scattering light is observed. causing the irradiated surface to glare) occurs due to even phases of light.

In addition, in a case of using the laser diode (LD), there is a disadvantage that a beam cross-section is an oval shape or light-emitting intensity distribution is a Gaussian distribution.

### SUMMARY OF THE INVENTION

In view of the foregoing circumstances, an object of the present invention is to provide a practical illuminating device using a solid light-emitting element such as a light-emitting diode, and others, and a projection type video display using such the illuminating device.

In order to solve the above-described problem, an illuminating device according to the present invention comprises a light source in which solid light-emitting elements are arranged in an array shape and an integrating means for integrating and guiding light emitted from each solid light-emitting element to an object to be illuminated.

With the above-described configuration, the light source in which solid light-emitting elements are arranged in an array shape is utilized, so that it is possible to increase a light amount. In addition, light emitted from each solid light-emitting element is integrated and guided to an object to be illuminated, so that it is possible to prevent bright and dark portions in an array shape from being generated on the liquid crystal display panel.

It is preferable that lens cells are arranged on a light-emission side of the solid light-emitting elements. As a result of the lens cells being provided, it is possible to restrain divergence of light emitted from the solid light-emitting elements and guide the light to an integrating means. Furthermore, it is preferable that the lens cells are integrally molded by a resin that molds respective solid light-emitting elements, or the lens cells are formed independently of the molding resin, and have a layer of resin interposed between the lens cells and the molding resin. Furthermore, it is preferable that the lens cells are arranged separately from one another in such a manner as to have wall surfaces, and the wall surfaces serve as the reflective surfaces. With this configuration, it is possible to prevent light emitted from the solid light-emitting element from being guided to an adjacent lens cell by the wall surfaces serving as reflective surfaces, and to give off the reflected light from the lens cell corresponding to the solid light-emitting element (that is, give off the reflected light not from the adjacent cell). As a result, utilization efficiency of light is improved. Moreover, a reflector may be interposed in each of the wall surfaces arranged separately between the lens cells. With this configuration, the utilization efficiency of light is further improved.

The integrating means may be formed of a first lens cluster that receives and condenses light and a second lens cluster provided on condensing points, and the lens cells may be configured to guide light emitted from the solid light-emitting elements to the first lens cluster. It is preferable that the lens cells and the first lens cluster are adhered to each other. This adhesion prevents undesired reflection of light, so that the utilization efficiency of light is improved.

The lens cells may be configured to condense the light from the solid light-emitting elements, and the integrating means may be provided with a lens cluster arranged on condensing points of light passed through the lens cells. This makes it possible to render an optical component corresponding to the first lens cluster unnecessary, so that the number of components is reduced.

It is preferable that each of the solid light-emitting elements, each of the lens cells, and each of the lenses in the lens cluster correspond to one another. A polarization conversion system formed of a polarizing beam splitter array may be arranged on a light-exit side of the integrating means. With the configuration in which the polarization conversion system is provided, in a case that a liquid crystal display panel is utilized as an object to be illuminated, it is possible to efficiently utilize light, and to contribute to obtaining a practical illuminating device. The polarization conversion system, in particular, is formed of the polarization beam splitter array, so that it is possible to obtain high utilization efficiency of light in the light source in which the solid light elements are arranged in an array shape.

It is preferable that an aspect ratio of each lens in the lens clusters in the integrating means coincides or approximately coincides with an aspect ratio of an object to be illuminated. In addition, it is preferable that an aspect ratio of each of the lens cells coincides with or approximately coincides with the aspect ratio of the object to be illuminated. Moreover, it is preferable that an aspect ratio of each solid light-emitting element coincides or approximately coincides with the aspect ratio of the object to be illuminated. On the other hand, an anamorphic lens may be provided, and an aspect ratio of a light flux guided to the anamorphic lens may be different from the aspect ratio of the object to be illuminated, and an aspect ratio of the light flux given off from the anamorphic lens may coincide or approximately coincide with the aspect ratio of the object to be illuminated. With such the configurations, it is possible to guide onto an entire surface of the object to be illuminated the light emitted from the solid light-emitting elements without being wasted, and thus, the utilization efficiency of the emitted light is improved.

The integrating means may be formed of a rod integrator. An aspect ratio of a light-exit surface of the rod integrator may coincide or approximately coincide with the aspect ratio of the object to be illuminated. On the other hand, an anamorphic lens may be provided on a side of the light-exit surface of the rod integrator, and an aspect ratio of the light-exit surface of the rod integrator may be different from the aspect ratio of the object to be illuminated and an aspect ratio of a light flux given off from the anamorphic lens may coincide or approximately coincide with the aspect ratio of the object to be illuminated.

Furthermore, an illuminating device according to the present invention comprises a light source formed by arranging a plurality of laser diodes that are solid light-emitting elements, an integrating means for integrating and guiding light emitted from the laser diodes to the object to be illuminated, and a phase-shift means for rendering phases of light emitted from the laser diodes non-uniform one another. With the above-described configuration, the light source formed by arranging a plurality of laser diodes is utilized, so that it is possible to increase a light amount. In addition, laser beams emitted from respective laser diodes are integrated and guided to an object to be illuminated, so that it is possible to prevent bright and dark portions corresponding to an arrangement of the laser diodes from being generated on the object to be illuminated. In addition, the phase-shift means for rendering phases of light emitted from the laser diodes non-uniform one another is provided, it is possible to reduce a speckle noise.

The phase-shift means may be formed of a plurality of plane-table transparent portions, respectively having different thicknesses, and being arranged on respective optical paths of the lights emitted from laser diodes. The phase-shift means may be formed of a plurality of plane-table transparent portions, respectively having different dielectric constants and being arranged on the respective optical paths of lights emitted from laser diodes. The phase-shift means is a tapered-shaped optical element arranged on an optical path of a laser beam emitted from the laser diode.

In addition, an illuminating device of the present invention comprises a light source formed by arranging a plurality of laser diodes that are solid light-emitting elements, an integrating means for integrating and guiding laser beams emitted from the laser diodes to an object to be illuminated, and a light diffusing means for diffusing the laser beams emitted from the laser diodes. With the above-described configuration, the light source formed by arranging a plurality of laser diodes is utilized, so that it is possible to increase a light amount. In addition, laser beams emitted from respective laser diodes are integrated and guided to an object to be illuminated, so that it is possible to prevent bright and dark portions corresponding to the arrangement of the laser diodes from being generated on the object to be illuminated. Moreover, the light diffusing means for diffusing the laser beams emitted from the laser diodes is provided, so that it is possible to reduce the speckle noise. The light diffusing means may be an optical element having minute unevenness.

Furthermore, an illuminating device according to the present invention comprises a light source formed by arranging a plurality of solid light-emitting elements, and an integrating means for receiving light emitted from each solid light-emitting element and integrating and guiding each of the lights received at a plurality of portions on a light receiving area to an object to be illuminated. With the above-described configuration, a light source formed by arranging a plurality of solid light-emitting elements is utilized, so that it is possible to increase a light amount. In addition, light emitted from each solid light-emitting element is integrated and guided to an object to be illuminated, so that it is possible to prevent bright and dark portions corresponding to an arrangement of the solid light-emitting elements from being generated on the object to be illuminated. Furthermore, the integrating means receives the light emitted from each solid light-emitting element, and integrates and guides each of the lights received at a plurality of portions on a light receiving area to the object to be illuminated. Therefore, even if a light-emitting intensity distribution exists in the solid light-emitting elements, the light-emitting intensity distribution is evened off. As a result, it is possible to even off brightness of every portion of the object to be illuminated.

Furthermore, an illuminating device according to the present invention comprises a light source formed by arranging a plurality of solid light-emitting elements respectively having different light-emitting intensity distribution, and an integrating means for integrating and guiding light emitted from each solid light-emitting element to an object to be illuminated. With such the configuration, too, it is possible to increase the light amount and prevent bright and dark portions corresponding to the arrangement of the solid light-emitting elements from being generated on the object to be illuminated. In addition, the light source in the illuminating device is formed by arranging a plurality of solid light-emitting elements respectively having different light-emitting intensity distribution, so that it is possible to even off brightness at every portion on the object to be illuminated. In the above-described configuration, solid light-emitting elements formed of light-emitting diodes of two-point light-emitting, and solid light-emitting elements formed of laser diodes may be provided in a mixed manner.

Moreover, an illuminating device according to the present invention comprises a light source formed by arranging a plurality of solid light-emitting elements, an intensity distribution conversion means for receiving light emitted from each solid light-emitting element and giving off the light after converting intensity distribution of the light, and an integrating means for integrating and guiding light given off from each intensity distribution conversion means to an object to be illuminated. In such the configuration, too, it is possible to increase a light amount, and to prevent the bright and dark portions corresponding to the arrangement of the solid light-emitting elements from being generated on the object to be illuminated. In addition, the intensity distribution conversion means for receiving light emitted from each solid light-emitting element and giving off the light after converting intensity distribution of the light are provided, so that it is possible to even off the brightness of every portion on the object to be illuminated.

Furthermore, an illuminating device according to the present invention comprises a light source formed by arranging a plurality of solid light-emitting elements, an integrating means for integrating and guiding light emitted from each solid light-emitting element to an object to be illuminated in respectively different condensing patterns. In such the configuration, too, it is possible to increase the light amount and prevent bright and dark portions corresponding to the arrangement of the solid light-emitting elements from being generated on the object to be illuminated. Furthermore, the light emitted from each solid light-emitting element is integrated and guided to the object to be illuminated in the respectively different condensing patterns. As a result, it is possible to even off the brightness at every portion on the object to be illuminated.

In these illuminating devices, the illuminating device comprises the laser diodes as the solid light-emitting elements, it is preferable that the object to be illuminated is a liquid crystal display panel, and a linear polarization direction of laser diodes coincides or approximately coincides with a polarization direction of the liquid crystal display panel.

Furthermore, in these illuminating devices, the illuminating device comprises the laser diodes as the solid light-emitting elements, and it is preferable that a longitudinal direction of an elliptical light emitted from the laser diodes coincides or approximately coincides with a longitudinal direction of the object to be illuminated.

Furthermore, in these illuminating devices, the illuminating device comprises laser diodes as the solid light-emitting elements, it is preferable that an aspect ratio of an optical element in an optical system that guides light emitted from the laser diodes to the object to be illuminated coincides or approximately coincides with an aspect ratio of the object to be illuminated, and a longitudinal direction of the elliptical light emitted from the laser diodes coincides or approximately coincides with a longitudinal direction of the optical element.

Moreover, an illuminating device of the present invention is characterized in that a plurality of solid light-emitting elements are three-dimensionally arranged in a mirror surface cylinder, one surface of which is a light-exit surface and inner sides of other surfaces of which are reflective surfaces, and light emitted from the solid light-emitting elements is integrated by the reflective surfaces and given off from the light-exit surface. With the above-described configuration, a plurality of solid light-emitting elements are three-dimensionally arranged, so that it is possible to increase the light amount. In addition, the light emitted from each solid light-emitting element is reflected in the mirror surface cylinder, integrated, and given off from the light-exit surface, so that it is possible to prevent bright and dark portions corresponding to an arrangement of the solid light-emitting elements from being generated on the object to be illuminated. It is preferable that the mirror surface cylinder is in a shape of a rectangular tubular body. In addition, it is preferable that an aspect ratio of the light-exit surface coincides or approximately coincides with an aspect ratio of an object to be illuminated. This makes it possible that the light emitted from the solid light-emitting elements is guided onto an entire surface of the object to be illuminated without being wasted. As a result, the utilization efficiency of the emitted light is improved. It is preferable that the mirror surface cylinder is in a tapered shape, and an area of the light-exit surface is larger than that of a surface opposite to the light-exit surface. This makes it possible to restrain divergence of light and irradiate the object to be illuminated with as much generated light as possible.

Furthermore, an illuminating device according to the present invention comprises a diffraction optical element portion having a collimating function or a condensing function on a light-emission side of a solid light-emitting element. Moreover, an illuminating device according to the present invention comprises a hologram optical element portion having a collimating function or a condensing function on a light-emission side of a solid light-emitting element. With such the configurations, it is possible to efficiently utilize even the light guided to portions outside an optical path if a normal lens is used, and to contribute to obtaining a practical illuminating device.

Furthermore, an illuminating device according to the present invention is characterized in that a plurality of solid light-emitting elements are two-dimensionally or three-dimensionally arranged, and a polarization conversion element is provided on a light-emission side of each solid light-emitting element. This makes it possible to efficiently utilize the light in a case of using a liquid crystal panel as the object to be illuminated, and contribute to obtaining a practical illuminating device.

Furthermore, a projection type video display according to the present invention comprises any one of the illuminating devices described above.

### BRIEF DESCRIPTION OF THE DRAWINGS

Figure 1 is a descriptive diagram showing an optical system of a projection type video display according to an embodiment of the present invention;
Figure 2 is a front view showing a liquid crystal display panel;
Figure 3 is a diagram showing a part of an illuminating device shown in Figure 1 in an enlarged fashion;
Figure 3A is a front view;
Figure 3B is a C-C cross-sectional view;
Figure 4 is a diagram showing a part of another illuminating device according to the embodiment of the present invention in an enlarged fashion;
Figure 4A is a front view;
Figure 4B is a C-C cross-sectional view;
Figure 5 is a descriptive diagram showing an operation of the illuminating device shown in Figure 1;
Figure 6 is a descriptive diagram showing an operation of an illuminating device according to another embodiment of the present invention;
Figure 7 is a descriptive diagram showing an operation of an illuminating device according to another embodiment of the present invention;
Figure 8 is a descriptive diagram showing an operation of the illuminating device according to another embodiment of the present invention;
Figure 9 is a descriptive diagram showing an optical system of the projection type video display according to an embodiment of the present invention;
Figure 10 is a descriptive diagram showing an integrating operation of the illuminating device shown in Figure 9;
Figure 11A is a side view of a phase-shift plate;
Figure 11B is a front view of a phase-shift plate;
Figure 12A is a side view of a phase-shift plate;
Figure 12B is a front view of a phase-shift plate;
Figure 13 is a descriptive diagram showing an operation of an illuminating device according to another embodiment of the present invention;
Figure 14 is a descriptive diagram showing an optical system of the projection type video display of the embodiment of the present invention;
Figure 15 is a descriptive diagram showing an integrating operation of the illuminating device shown in Figure 14;
Figure 16 is a descriptive diagram showing an operation of an illuminating device according to another embodiment of the present invention;
Figure 17 is a descriptive diagram showing an operation of an illuminating device according to another embodiment of the present invention;
Figure 18 is a descriptive diagram of LD chips and LED chips in the illuminating device shown in Figure 17;
Figure 19 is a descriptive diagram showing an operation of an illuminating device according to another embodiment of the present invention;
Figure 20 is a descriptive diagram showing an operation of an illuminating device according to another embodiment of the present invention;
Figure 21 A and 2 1 B are descriptive diagrams showing a light intensity distribution conversion prism used in the illuminating device shown in Figure 20;
Figure 22 is a descriptive diagram showing an optical system of the projection type video display according to the embodiment of the present invention;
Figure 23 is a descriptive diagram showing the projection type video display according to the embodiment of the present invention in an enlarged fashion;
Figure 24 is a descriptive diagram showing an operation of an illuminating device according to another embodiment of the present invention;
Figure 25 is a descriptive diagram showing an operation of an illuminating device according to another embodiment of the present invention; and
Figure 26 is a diagram showing another embodiment of the present invention and is a descriptive diagram showing a relationship between a longitudinal direction of a light-emitting element and an alignment of polarizing beam splitters.

### BEST MODE FOR PRACTICING THE INVENTION

### (Embodiment 1)

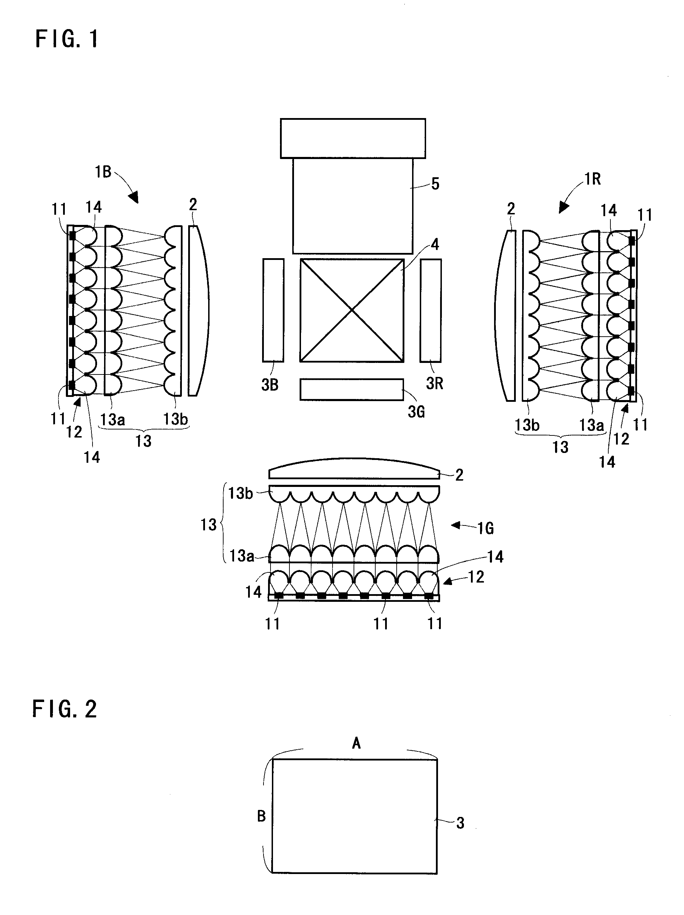

Hereinafter, an illuminating device and a projection type video display will be described on the basis of Figures 1 to 8, and Figure 26.

Figure 1 is a diagram showing an optical system of a three-panel projection type video display. The projection type video display comprises three illuminating devices 1R, 1G, and 1B. (Hereinafter, a numeral "1" is used when generally referring to the illuminating device). The illuminating device 1R emits light in red, the illuminating device 1G emits light in green, and the illuminating device 1B emits light in blue. The light emitted from each illuminating device 1 is guided to transmission type liquid crystal display panels 3R, 3G, and 3B for respective colors (Hereinafter, a numeral "3" is used when generally referring to the crystal display panel) by a convex lens 2. Each liquid crystal display panel 3 is formed of being provided with an incidence-side polarizer, a panel portion formed by sealing a liquid crystal between a pair of glass plates (in which a pixel electrode and an alignment film are formed), and an exit-side polarizer. As the transmission type liquid crystal display panel, the liquid display panel in which a micro lens is arranged in each pixel portion is known. However, the liquid crystal display panels having no micro lens are used in this embodiment. In a configuration in which the illuminating device 1 (point light source), utilization efficiency of light is further improved when using the liquid crystal display panels having no micro lens. Modulated light (image light in respective colors) modulated as a result of passing through the liquid crystal display panels 3R, 3G, and 3B is combined by a dichroic prism 4, and rendered color image light. The color image light is projected by a projection lens 5, and displayed on a screen.

Figure 2 is a front view showing the liquid crystal display panel 3. The liquid crystal display panel 3 has an aspect ratio of horizontal A to vertical B. A to B is, for example, 4 to 3, or 16 to 9.

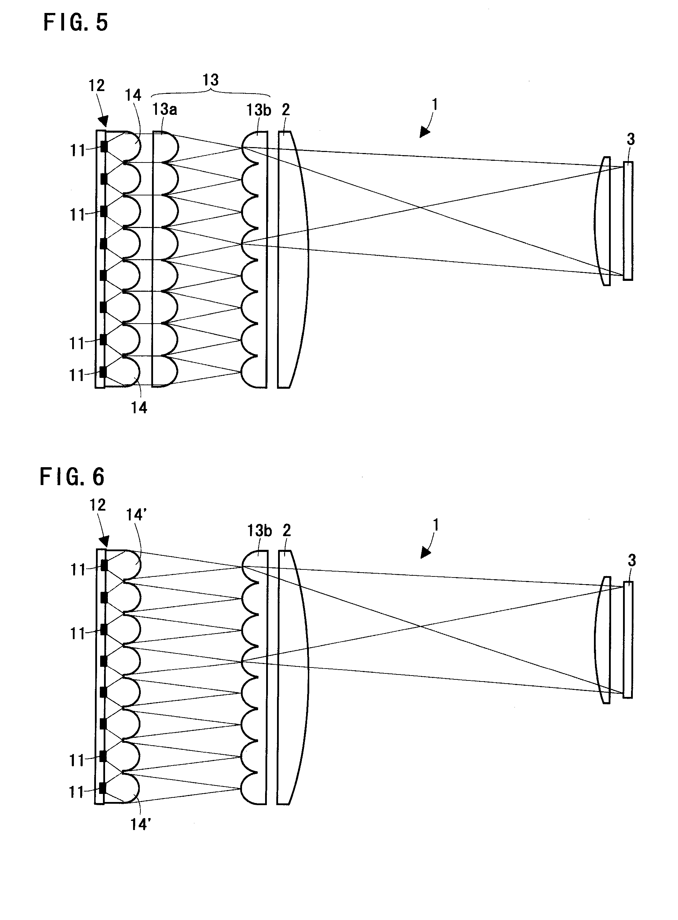

The illuminating device1 is formed of a light source 12 in which LED chips 11··· are arranged in an array shape and lens cells 14··· are arranged on a light-emission side of each of the LED chips 11, and a pair of fly's eye lenses 13 that integrates and guides to the liquid crystal panel 3 light emitted from each of the LED chips 11 and collimated by the lens cells 14. Thus, as a result of the LED chips 11··· being arranged in the array shape, it is possible to increase a light amount. The pair of fly's eye lenses 13, as shown in Figure 5, is formed of a pair of lens clusters 13a, 13b, and each pair of lenses guides the light emitted from each LED chip 11 onto an entire surface of the liquid crystal display panel 3. That is, the light emitted from the LED chips 11 is integrated and guided to the liquid crystal panel 3, so that it is possible to prevent bright and dark portions in the array shape from being generated on the liquid crystal display panel 3 (on an image on a screen). In the above-described example, in particular, each of the LED chips 11, each of the lens cells 14, and each of the lenses in lens clusters 13a and 13b correspond to one another.

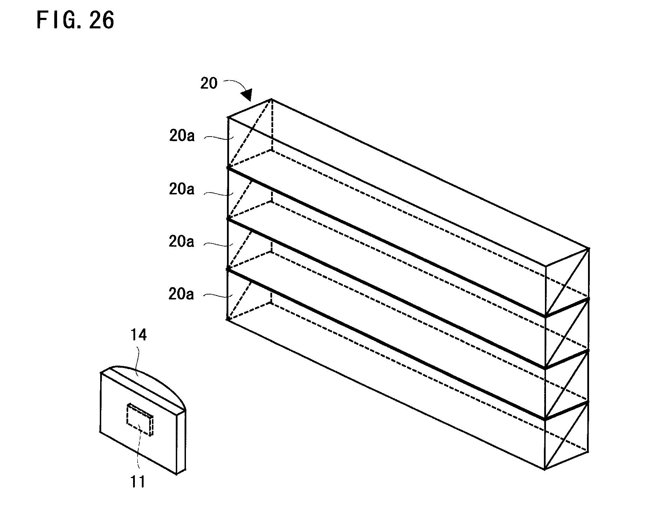

A polarization conversion system may be arranged between the pair of fly's eye lenses 13 and a condenser lens 2. As shown in Figure 26, the polarization conversion system 20 is structured of a polarizing beam splitter array (hereinafter referred to as a PBS array) formed by arranging a multiplicity of polarizing beam splitters 20a. The PBS array is provided with a polarized light separating surface and a retardation plate (1/2λ plate). Each polarized light separating surface of the PBS array transmits P-polarized light, for example, out of light from the pair of fly's eye lenses 13, and changes an optical path of S-polarized light by 90 degrees. The S-polarized light having the optical path changed is reflected by an adjacent polarized light separating surface and given off as it is. On the other hand, the P-polarized light that passes through the polarized light separating surface is converted into the S-polarized light by the retardation plate provided on a front side (light-exit side) of the polarized light separating surface, and given off therefrom. That is, in this example, approximately all the light is converted into the S-polarized light. The polarizing beam splitters 20a have a long and narrow square pole shape. In this embodiment, a longitudinal direction of the LED chips 11 (the longitudinal direction of the lens cells 14, and the lens clusters 13a and 13b) coincides with the longitudinal direction of the polarizing beam splitters 20a. That is, the polarizing beam splitters 18a are arranged in a short-side direction of the LED chips 11. This leads to an improvement of utilization efficiency of light.

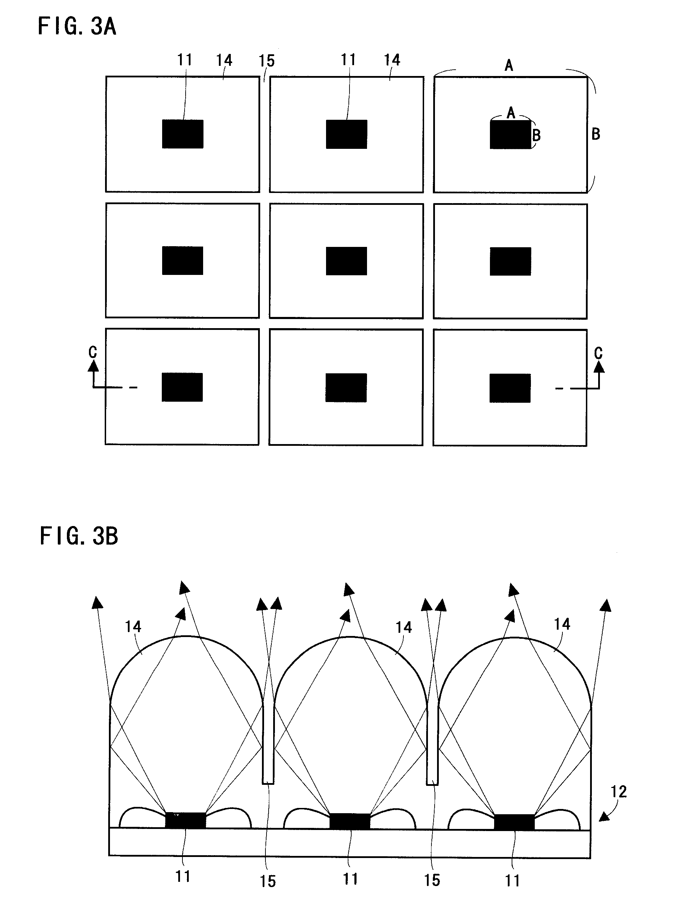

Figure 3 is a diagram showing a part of a light source 12 in an enlarged fashion. Figure 3A is a plane view, and Figure 3B is a C-C cross sectional view of Figure 3A. The LED chips 11··· are molded by a transparent resin, and as a result the transparent resin being formed in a convex shape, the lens cells 14 ··· are formed. The LED chips 11 and the lens cells 14 are formed in a square shape as shown in Figure 3A, and furthermore, the aspect ratios of the LED chips and the lens cells 14 coincide or approximately coincide with the aspect ratio of the liquid crystal display panel 3. This makes it possible that the light emitted from the LED chips 11 is guided onto an entire surface of the liquid crystal display panel 3 without being wasted, and the utilization efficiency of the emitted light is improved.

Furthermore, as shown in Figure 3B, the lens cells 14 are arranged separately from one another in such a manner as to have wall surfaces (air gaps 15) between the cells, and the wall surfaces function as reflective surfaces. It is possible that each wall surface functioning as the reflective surface prevents the light emitted from an LED chip 11 from being guided to an adjacent cell 14, and the reflected light is given off from a lens cell 14 corresponding to the LED chip 11 (that is, the reflected light is not given off from an adjacent lens cell 14). This leads to an improvement of utilization efficiency of light.

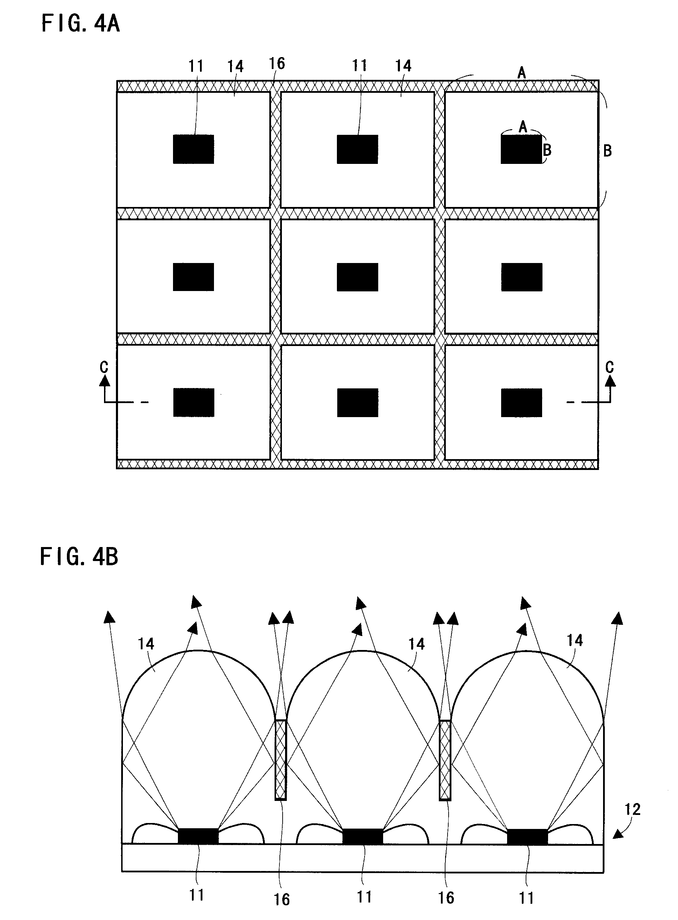

In Figure 4 illustrates a configuration in which reflectors 16 are arranged in portions corresponding to the air gaps 15. In such the configuration in which the reflectors 16 are interposed, the light utilization efficiency is further improved. The reflectors 16 may be arranged at the stage of resin molding, or may be inserted into the air gaps 15 after the resin molding. It is preferable that a metal plate (foil) having high reflectance is used for the reflectors 16.

Figure 6 illustrates a modified example of the illuminating device 1. Lens cells 14' shown in Figure 6 are designed not to collimate the light emitted from the LED chips 11 but to guide the light to a center of each lens in a lens cluster 13b. In such the configuration, it is possible to eliminate a lens cluster 13a, so that the number of components is reduced.

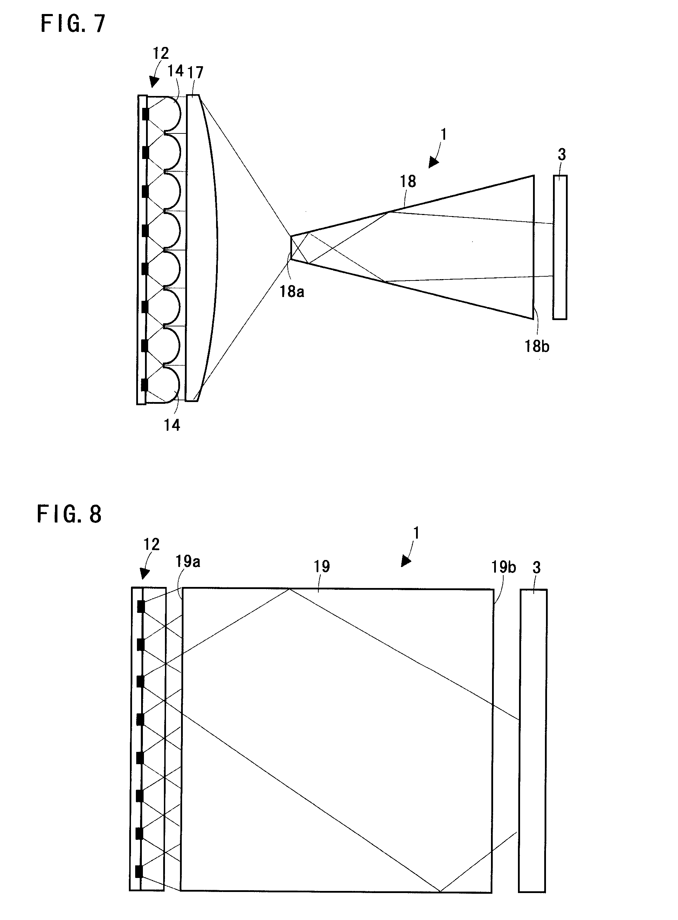

Figures 7 and 8 respectively illustrate the illuminating device 1 using a rod integrator as an integrating means. In a configuration shown in Figure 7, a rod integrator 18 is so constructed that a light-exit surface 18b is larger than a light-incidence surface 18a, the aspect ratio of the light-incidence surface 18a coincides or approximately coincides with that of the liquid crystal display panel 3, and a size of the light-exit surface 18b is approximately equal to a size of the liquid crystal display panel 3. The light from the LED chips 11 is collimated by the lens cells 14 and guided onto the light-incidence surface 18a of the rod integrator 18 by a condenser lens 17. The light incident on the light-incidence surface 18a of the rod integrator 18 is integrated and irradiated to the liquid crystal display panel 3. A rod integrator 19 shown in Figure 8 is so constructed that sizes of a light-incidence surface 19a and a light-exit surface 19b are equal, and the sizes are approximately equal to sizes of the liquid crystal display panel 3 and the light source 12. It is noted that the lens cells 14 are not formed in the light source 12 in Figure 8, and however, the lens cells 14 may certainly be formed.

It is noted that the lens cells 14 are integrally formed in the light source 12 by the molding resin in the above-described description. However, the present invention is not limited to such the configuration. The lens cells may be made by resin or glass independently of the molding resin. In this case, it is preferable that a layer of transparent resin is interposed without forming spaces between the lens cells and the molding resin (protecting resin for LED chips 11). In addition, a refractive index of the layer of the transparent resin may be equal to or approximately equal to refractive indexes of the lens cells and the molding resin. It is possible to apply such the configuration to another embodiment in which the lens cells are arranged corresponding to the LED chips 11.

Furthermore, molded LED lamps which are already assembled may be arranged in an array shape and used as a light source. In such the configuration, it is preferable that an outer shape of the molded LED lamps and a shape of element portions coincide or approximately coincide with a shape (aspect ratio) of the liquid crystal display panel 3 and side walls function as the reflective surface.

In addition, in the projection type video display, a reflection type liquid crystal display panel may be used, in addition to a transmission type, or a display panel of a type in which micro mirrors serving as pixels are individually driven may be used instead of these liquid crystal display panels. Furthermore, although the projection type video display is provided with three illuminating devices 1R, 1G, and 1B which emit light in respective colors, an illuminating device that emits light in white is used, and the light in white may be separated by a dichroic mirror and the like. Or, the illuminating device that emits light in white is used, and the light in white may be guided to a single-panel color display panel without being separated. In a case of using the illuminating device that emits the light in white, it may be configured that each solid light-emitting element emits the light in white, or solid light-emitting elements which emit light in red, light in green, or light in blue are properly arranged. Moreover, the solid light-emitting elements are not limited to the light-emitting diode (LED).

Incidentally, a shape of a light flux guided to the liquid crystal display panel 3 as an object to be illuminated is influenced by the aspect ratio of the elements related to the shape of the light flux (the solid light-emitting element, the lens cell, each lens of fly's eye lenses, and a cross section of the rod integrator). In the above-described example, the aspect ratio of the object to be illuminated is 4 to 3, and the aspect ratio of the elements related to the shape of the light flux is also 4 to 3. However, these ratios may vary. The aspect ratio of the elements related to the shape of the light flux may be different from the aspect ratio of the object to be illuminated, such as 4 to 4, for example, and the light flux of which aspect ratio is 4 to 4 may be changed by an anamorphic lens (in the above-described case, the light flux is converged to some extent in a vertical direction), and the aspect ratio of the light flux may coincide or approximately coincide with the aspect ratio of the object to be illuminated (for example, 4 to 3) at the stage that the light flux is guided to the object to be illuminated. It is possible to apply such the configuration to another embodiment in which the elements related to the shape of the light flux (the solid light-emitting element, the lens cell, each lens of the fly's eye lenses, and the rod integrator) are provided.

### (Embodiment 2)

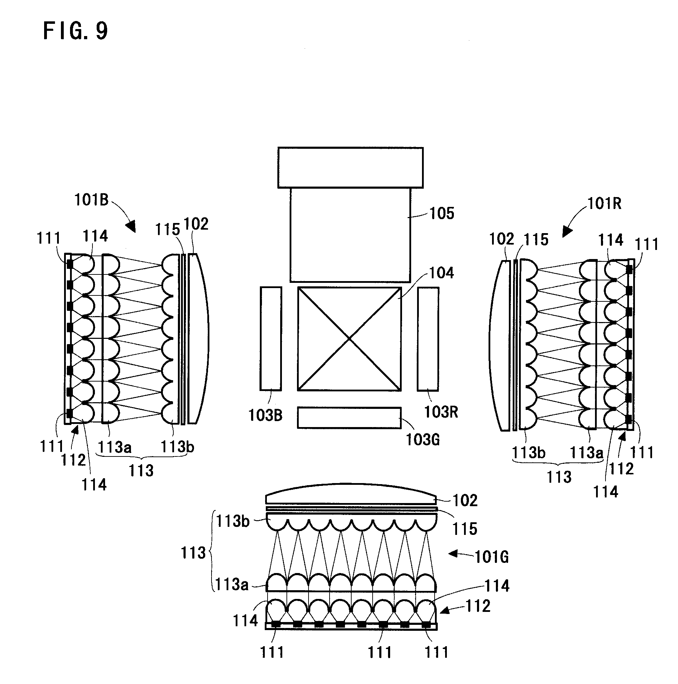

Hereinafter, an illuminating device and a projection type video display according to the embodiment 2 of the present invention will be described on the basis of Figures 9 to 13.

Figure 9 is a diagram showing an optical system of a three-panel projection type video display. This projection type video display is provided with three illuminating devices 101R, 101 G, and 101B (Hereinafter, a numeral "101" is used when generally referring to the illuminating device). The illuminating device 101R emits light in red, the illuminating device 101G emits light in green, and the illuminating device 101B emits light in blue. The light emitted from each illuminating device 101 is guided to liquid crystal display panels 103R, 103G, and 103B for respective colors (Hereinafter, numeral "103" is used when showing not specifying each liquid crystal display panel) by a condenser lens 102. Each liquid crystal display panel 103 is formed of being provided with an incidence-side polarizer, a panel portion formed by sealing a liquid crystal between a pair of glass plates (in which a pixel electrode and an alignment film are formed), and an exit-side polarizer. Modulated light (image light in respective colors) modulated as a result of passing through the liquid crystal display panels 103R, 103G, and 103B is combined by a dichroic prism 104, and rendered color image light. The color image light is projected by a projection lens 105, and displayed on a screen.

The illuminating device 101 is formed of a light source 112 in which LD (Laser Diode) chips 111··· are arranged in an array shape and lens cells 114··· are arranged on a light-emission side of each of the LD chips 111, and a pair of fly's eye lenses 113 that integrates and guides to the liquid crystal panel 103 laser beams emitted from each of the LD chips 111 and collimated by the lens cells 114. Thus, as a result of the LD chips 111··· being arranged in the array shape, it is possible to increase a light amount.

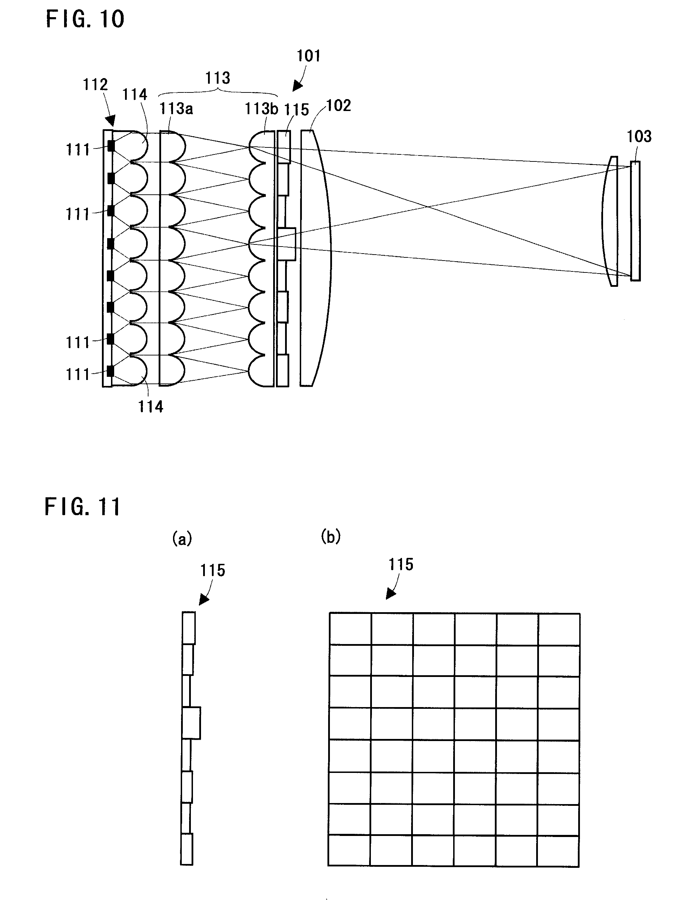

The pair of fly's eye lenses 113, as shown in Figure 10, is formed of a pair of lens clusters 113a and 113b, and each pair of lenses guides the laser beams emitted from each of the LD chips 111 onto an entire surface of the liquid crystal display panel 103. That is, the laser beams emitted from the LD chips 111 are integrated and guided to the liquid crystal panels 103, so that it is possible to prevent bright and dark portions in an array shape from being generated on the liquid crystal display panel 103 (on an image on a screen).

A phase-shift plate 115 is provided between the pair of fly's eye lenses 113 and the condenser lens 102. The phase-shift plate 115, as shown in Figure 11A, 11B, is formed of a plurality of plane-table transparent portions, respectively having different thicknesses, and being arranged on respective optical paths of laser beams from LD chips 111. Both surfaces of each plane-table transparent portion are perpendicular to an optical axis. When light transmits the plane-table transparent portions, a distance of the light (an optical distance (n · d : n is a refractive index, d is a thickness of medium)) changes in proportion to the refractive index of each plane-table transparent portion. Each plane-table transparent portion has a different thickness, so that the distance of light (optical distance) is different and thus, phases of laser beams which transmit the respective plane-table transparent portions are also different. As a result of this, respective laser beams emitted from the respective LD chips have different phases, and therefore, the phases of the laser beams emitted from the respective LED chips 111 and superposed on the liquid crystal display panel 103 become non-uniform, so that it is possible to reduce speckle noise.

It is noted that the phase-shift plate 115 is provided between the pair of fly's eye lenses 113 and the condenser lens 102 in the above-described example of the configuration, and however, another configuration may be adopted. The phase-shift plate 115 may be arranged at any position between the LD chips 111 and the liquid crystal display panel 103.

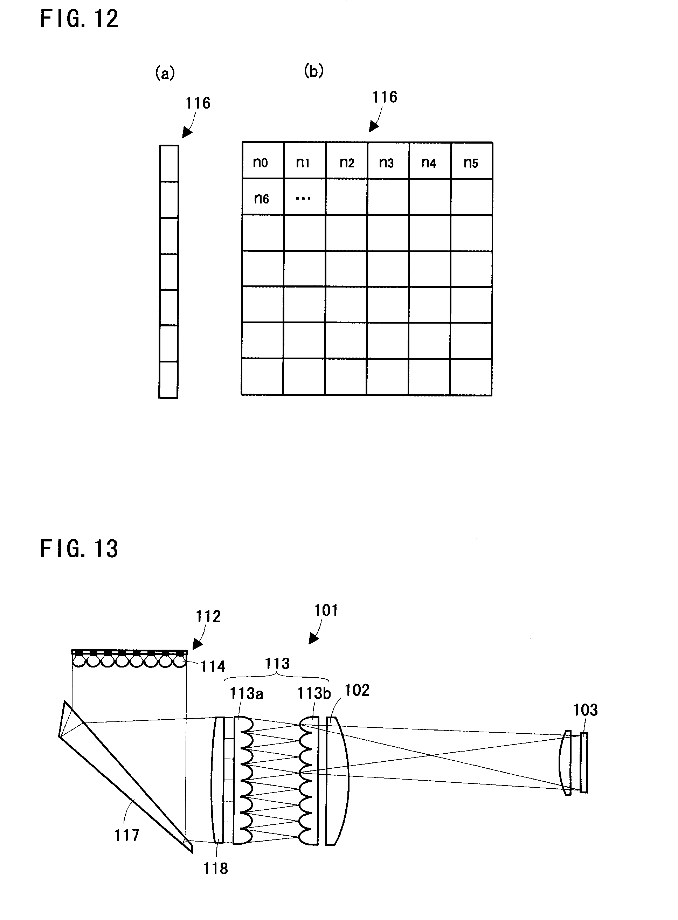

In Figure 12, a phase-shift plate 116 is shown. The phase-shift plate 116, as shown in Figure 12A, is formed of a plurality of plane-table transparent portions (a plurality of plane-table transparent areas) having the same thickness. Each plane-table transparent portion (a plane-table transparent area) is arranged on an optical path of a laser beam emitted from each LD chip 111. Although each plane-table transparent portion has the same thickness, as shown in Figure 12B, the refractive index (the refractive index corresponds to a dielectric constant) n of each plane-table transparent portion is different from each other, such as n0, n1, n2, ···. When laser beams transmit the plane-table transparent portions, a distance of light (optical distance) changes in proportion to the refractive indexes of the plane-table transparent portions, so that phases of the laser beams which transmit the respective plane-table transparent portions are different. As a result of this, although the phases of laser beams emitted from the LD chips 111 is the same in the laser beams, the phase of a laser beam emitted from a certain LD chip is different from that of a laser beam emitted from the other LD chip. Accordingly, the phases become non-uniform on the liquid crystal display panel 103, so that it is possible to reduce the speckle noise.

Figure 13 illustrates a modified example of the illuminating device 101. In the illuminating device shown in Figure 13, a tapered-shaped plate prism 117 is arranged on an optical path of a laser beam emitted from a light source 112. When the laser beam is incident on the tapered-shaped plate prism 117, a distance of light (optical distance) is to be different in a change direction of a thickness of the tapered-shaped plate prism 117, so that the phases of laser beams emitted from respective LD chips are different in the laser beams. In addition, regarding the LD chips 111... aligned in the change direction of the thickness of the tapered-shaped plate prism 117, the phases of the laser beams are to be different one another. As a result of this, it is possible to reduce the speckle noise. It is noted that one tapered-shaped plate prism 117 may be arranged corresponding to one LD chip 111. Furthermore, it is further preferable to change an extent (angle) of wedge of each tapered-shaped plate prism 117.

In the above examples, the speckle noise is reduced by shifting the phases of the laser beams from each of the LD chips 111. It is also possible to reduce the speckle noise by providing a light diffusing means that diffuses a laser beam on the optical path of the laser beam. As the light diffusing means, it is possible to use frosted glass having minute unevenness, and the like. In addition, the minute unevenness may be formed on surfaces of the pair of the fly's eye lenses 113, the condenser lens 102, and the like.

It is noted that the pair of fly's eye lenses is shown as an integrating means in the above descriptions, and however, a rod integrator may be used. Moreover, as the LD chip, not only an edge emission-type laser but also a surface emission-type laser may be used. Furthermore, a type in which a plurality of LDs are formed on a single substrate may be used. In addition, in the projection type video display, a reflection type liquid crystal display panel may be used, in addition to a transmission type, or a display panel of a type in which micro mirrors serving as pixels are individually driven may be used instead of these liquid crystal display panels. Furthermore, although the projection type video display is provided with three illuminating devices 101R, 101G, and 101B which emit light in respective colors, an illuminating device that emits light in white is used, and the light in white may be separated by a dichroic mirror and the like. Or, the illuminating device that emits light in white is used, and the light in white may be guided to a single-panel color display panel without being separated. In a case of using the illuminating device that emits light in white, it may be configured that LDs which emit light in red, light in green, or light in blue are properly arranged.

Furthermore, although not shown, a polarization conversion system may be provided at a near side position of the condenser lens 102, or the like. The polarization conversion system, as previously noted, is structured of the PBS array.

As described above, with the invention according to the embodiment 2, there is an effect that the speckle noise caused in a case of using the laser diode is reduced.

### (Embodiment 3)

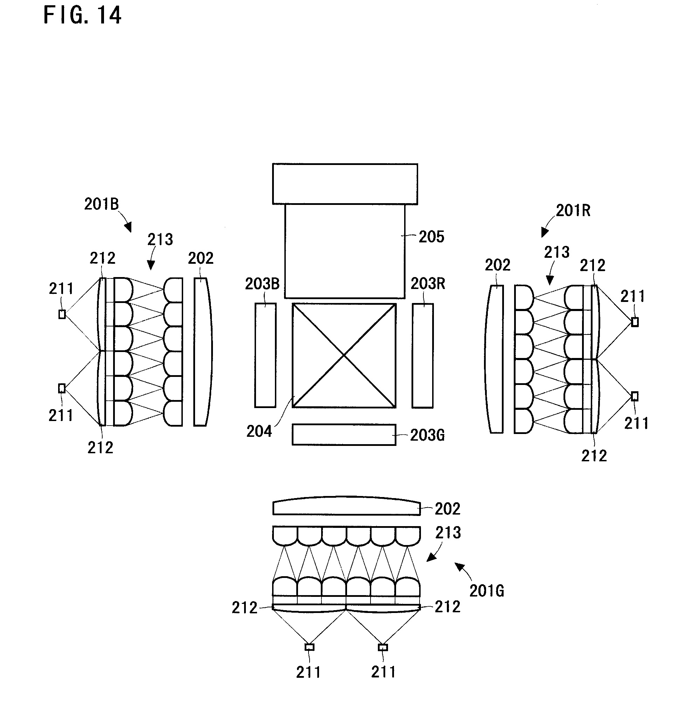

Hereinafter, an illuminating device and a projection type video display according to the embodiment 3 of the present invention will be described on the basis of Figures 14 to 21.

Figure 14 is a diagram showing an optical system of a three-panel projection type video display. This projection type video display is provided with three illuminating devices 20 1 R, 201 G, and 201 B (Hereinafter, a numeral "201" is used generally referring to the illuminating device). The illuminating device 201 R emits light in red, the illuminating device 201G emits light in green, and the illuminating device 201B emits light in blue. The light emitted from each illuminating device 201 is guided to liquid crystal display panels 203R, 203G, and 203B for respective colors (Hereinafter, a numeral "203" is used when generally referring to the liquid crystal display panel) by a condenser lens 202. Each liquid crystal display panel 203 is formed of being provided with an incidence-side polarizer, a panel portion formed by sealing a liquid crystal between a pair of glass plates (in which a pixel electrode and an alignment film are formed), and an exit-side polarizer. Modulated light (image light in respective colors) modulated as a result of passing through the liquid crystal display panels 203R, 203G, and 203B is combined by a dichroic prism 204, and rendered color image light. The color image light is projected by a projection lens 205, and displayed on a screen.

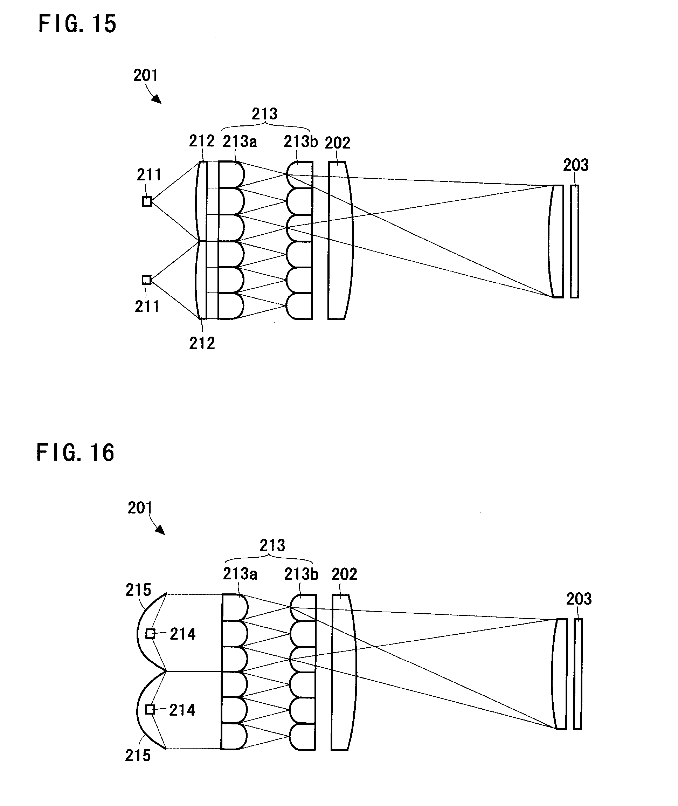

The illuminating device 201 is formed of a light source in which a plurality of LD (Laser Diode) chips 211··· are arranged in an array shape, collimating lenses 212 provided on a light-emission side of each of the LD chips 211, and a pair of fly's eye lenses 213. The light source is formed by arranging a plurality of LD chips 211···, so that it is possible to increase a light amount. The pair of fly's eye lenses 213, as shown in Figure 15, is formed of a pair of lens clusters 213a , 213b, and a plurality of lenses (lens clusters) correspond to one LD chip 211. The light emitted from each LD chip 211 and collimated by the collimating lens 212 is guided to the lens cluster located in a position corresponding to the collimating lens 212. On the lens cluster (a light receiving surface), light-emitting intensity distribution of the LD chip 211 is reflected, and each of the light received at a plurality of portions on the light receiving surface (each of bright areas and dark areas) is integrated and guided to the liquid crystal display panel 203 by each lens in the lens cluster. As a result, it is possible to prevent bright portions and dark portions corresponding to an arrangement of the LD chips 211 from being generated on the liquid crystal display panel 203 (on an image on a screen), and even if the light-emitting intensity distribution exists in the LD chips 211, the light-emitting intensity distribution is evened off, so that it is possible to even off brightness at every portion on the liquid crystal display panel 203.

Moreover, in the above example, a linear polarization direction of the LD chip 211 coincides or approximately coincides with a linear polarization direction of the liquid crystal display panel 203. In addition, an aspect ratio of each lens in the lens clusters 213a, 213b, that of the collimating lens 212, and that of a shape of a light-emission portion of the LD chip 211 coincide or approximately coincide with that of the liquid crystal display panel 203. Furthermore, a longitudinal direction of an elliptical light emitted from the LD chip 211 coincides or approximately coincides with a longitudinal direction of the liquid crystal display panel 203. As a result of this, the light emitted from the LD chips 211 is guided onto the entire surface of the liquid crystal display panel 203 without being wasted, so that the utilization efficiency of the light is improved. It is noted that, as described in the embodiment 1, the aspect ratio of the elements related to the shape of the light flux (the solid light-emitting element, the lens cells, each lens of fly's eye lenses, and the rod integrator) may be rendered different from the aspect ratio of the display panel, and the aspect ratio of the light flux may be rendered coincident or approximately coincident with the aspect ratio of the display panel using the anamorphic lens. In a case of this embodiment, one anamorphic lens may be provided for the whole pair of the fly's eye lenses 213.

Figure 16 illustrates a modified example of the illuminating device 201. The light source of the illuminating device shown in Figure 16 is formed of LED (light-emitting diode) chips 214 and parabolic mirrors 215. In such the configuration, too, a plurality of lenses (a lens cluster) correspond to one LED chip 214. The plurality of lenses receive the light emitted from each LD chip 211, integrate each of the light received at a plurality of portions on the light receiving area, and guide the integrated light to the liquid crystal display panel 203. A light-exit side of the parabolic mirror 215 is formed in an approximately square shape, and an aspect ratio thereof coincides or approximately coincides with the aspect ratio of the liquid crystal display panel 203.

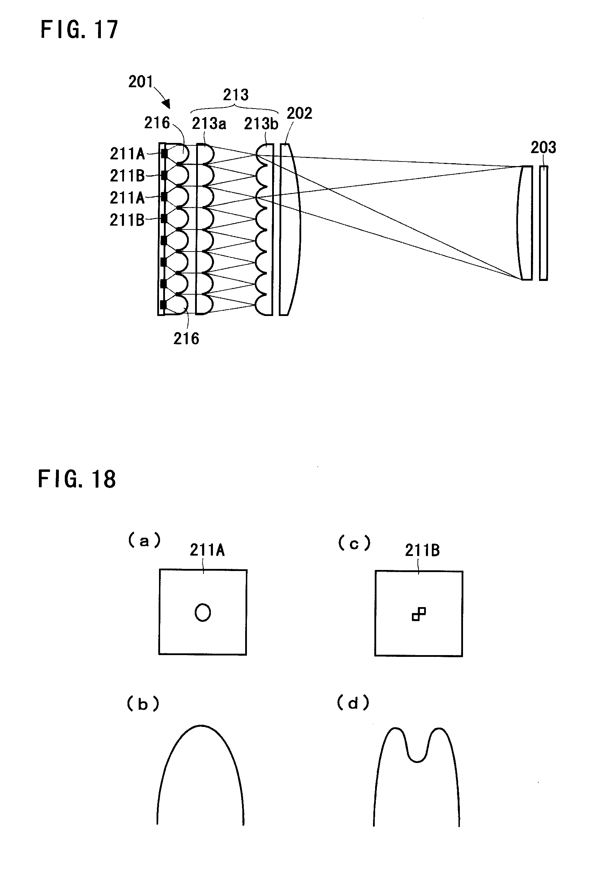

Figure 17 illustrates a modified example of the illuminating device 201. It is noted that the LD chips and LED chips are shown as a pair of light-emitting chips having different light-emitting patterns (an intensity distribution profile). However, another combination may be possible. The illuminating device shown in Figure 17 is formed of a light source in which LD chips 211A··· and LED chips 211B are arranged in an array shape and lens cells 216··· are arranged on the light-emission side of the respective chips 211A, 211B, and a pair of fly's eye lenses 213 for integrating and guiding the light emitted from each of the chips 211 A, 211 B and collimated by the lens cell 216 to a liquid crystal display panel 203. Thus, the chips 211A, 211B are arranged in the array shape, so that it is possible to increase the light amount. The lens cell 216 is formed in a square shape. In addition, an aspect ratio of the lens cell coincides or approximately coincides with that of the liquid crystal display panel 203. A pair of fly's eye lenses 213 is structured of a pair of lens clusters 213a, 213b, and each pair of lenses guides the light emitted from each of the chips 211A, 211B onto the entire surface of the liquid crystal display panel 203. Here, the LD chip 211A, as shown in Figure 18A, has a single light-emitting point, and the light-emitting intensity distribution, as shown in Figure 18B, is Gaussian distribution. On the other hand, the LED chip 211 B, as shown in Figure 18C, has two light-emitting points, the light-emitting intensity distribution, as shown in Figure 18D, has a center trough sandwiched by two peaks on both sides. Thus, the chips 211 A, 211 B having respectively different light-emitting intensity distribution are arranged, and the light emitted from each of the chips 211A, 211B is integrated and guided onto the entire surface of the liquid crystal display panel 203. As a result, it is possible to even off the brightness at every portion on the liquid crystal display panel 203.

It is noted that, in addition to the above example in which the chips are arranged so as to have two patterns (light-emitting intensity distribution), the chips may be arranged so as to have many patterns, that is, three, four, or more patterns. Furthermore, the LD chips 211A··· may be arranged in such a manner that the longitudinal directions of the elliptical beam cross-sections of the respective LD chips 211A··· face different directions.

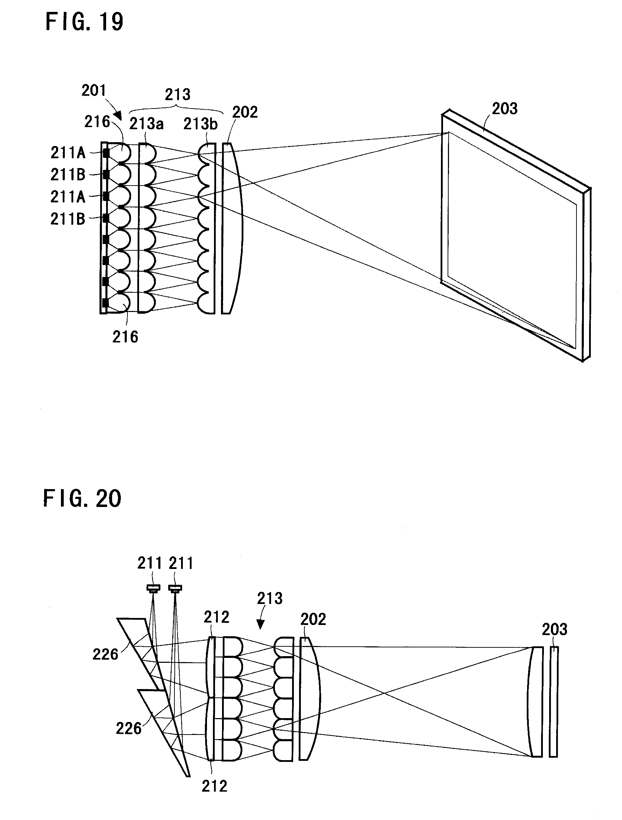

Figure 19 illustrates a modified example of the illuminating device 201. The illuminating device shown in Figure 19 uses chips having a multiplicity of patterns of light-emitting intensity distribution. The illuminating device is formed of a light source in which LD chips 211 A··· and LED chips 211 B are arranged in an array shape and lens cells 216··· are arranged on a light-emission side of each of the chips 211A, 211B, and a pair of fly's eye lenses 213 that integrates and guides the light emitted from each of the chips 211A, 211B and collimated by the lens cells 216 to the liquid crystal display panel 203. The pair of fly's eye lenses 213 is structured of a pair of lens clusters 213a, 213b, and each pair of the lenses guide the light emitted from each of the chips 211A, 211B to the liquid crystal display panel 203. The cross sections of respective rectangular light fluxes that are guided to the liquid crystal display panel are the same in shape. However, the profiles of intensity distribution of the respective rectangular light fluxes are different. As a result, it is possible to even off the brightness at every portion on the liquid crystal display panel 203.

Figure 20 illustrates a modified example of the illuminating device 201. The illuminating device shown in Figure 20 is formed of a light source in which a plurality of LD chips 211... are arranged, intensity distribution conversion prisms 226 that receive the light emitted from each LD chip 211 and give off the received light after converting intensity distribution thereof, collimating lenses 212, and a pair of fly's eye lenses 213. The pair of fly's eye lenses 213 is structured of a pair of lens clusters 213a, 213b, and a plurality of lenses (lens cluster) correspond to one LD chip 211.

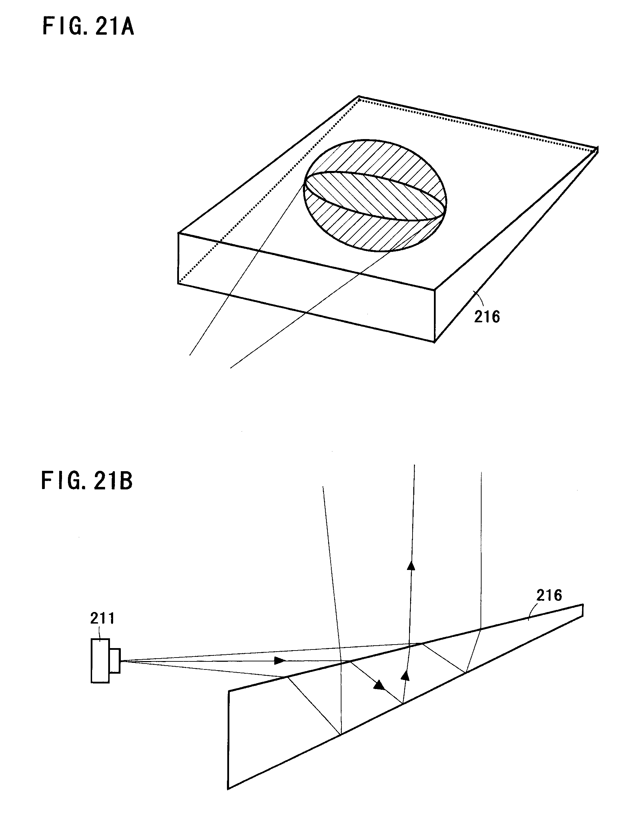

The intensity distribution conversion prism 226, for example, as shown in Figures 21A, 21B, is formed of a tapered-shaped plate prism and arranged such that the laser beam emitted from the LD chip 211 is incident from a thick-walled side. Although the laser beam, as shown in Figure 2 1 A, has a long and thin elliptical shape and is incident on a light-incidence side of the prism 226, the laser beam is emitted in a shape of an ellipse that is closer to a circle or in a shape of a circle as a result of an operation of refraction and a reflex by a reflecting surface (coated by a reflector made of metal, or the like) being applied in the prism 226. In a case that the laser beam is emitted in a shape of the ellipse, it is preferable that a longitudinal direction of the ellipse coincides or approximately coincides with a longitudinal direction of the liquid crystal display panel 203, for example.

It is noted that the pair of fly's eye lenses is shown as an integrating means in the above descriptions, and however, a rod integrator may be used. Moreover, as the LD chip, in addition to the edge emission-type laser, the surface emission-type laser may be used. Furthermore, a type in which a plurality of LDs are formed on a single substrate may be used. In addition, in the projection type video display, a reflection type liquid crystal display panel may be used, in addition to a transmission type, or a display panel of a type in which micro mirrors serving as pixels are individually driven may be used instead of these liquid crystal display panels. Furthermore, although the projection type video display is provided with three illuminating devices 201 R, 201 G, and 20 1 B which emit light in respective colors, an illuminating device that emits light in white is used, and the light in white may be separated by a dichroic mirror and the like. Or, the illuminating device that emits light in white is used, and the light in white may be guided to a single-panel color display panel without being separated. In a case of using the illuminating device that emits the light in white, it may be configured that each solid light-emitting element emits the light in white, or solid light-emitting elements which emit light in red, light in green, or light in blue are properly arranged.

Furthermore, although not shown, a polarization conversion system may be provided at a near-side position of the condenser lens 202, or the like. The polarization conversion system, as previously noted, is structured of the PBS array.

As described above, according to the invention of the embodiment 3, there is an effect that it is possible to provide a practical illuminating device and a projection type video display using the illuminating device, even if a solid light-emitting element such as a laser diode having light-emitting intensity distribution, and the like are used.

### (Embodiment 4)

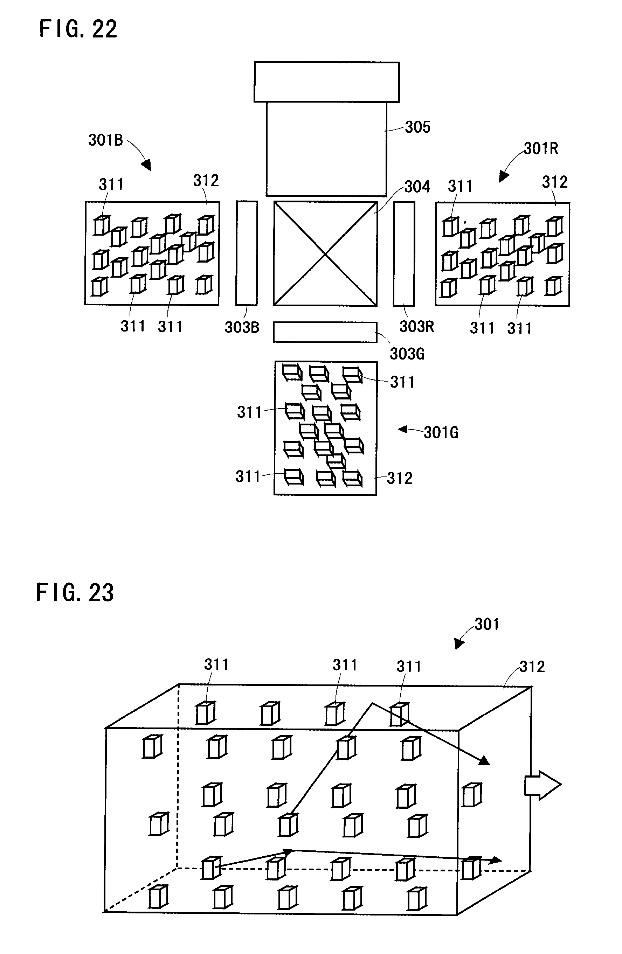

Hereinafter, the illuminating device and the projection type video display according to the embodiment of the present invention will be described on the basis of Figures 22 to 25.

Figure 22 is a diagram showing an optical system of a three-panel projection type video display. This projection type video display is provided with three illuminating devices 301R, 301G, and 301B (Hereinafter, a numeral "301" is used when generally referring to the illuminating device). The illuminating device 301R emits light in red, the illuminating device 301G emits light in green, and the illuminating device 301B emits light in blue. The light emitted from each illuminating device 301 is guided to liquid crystal display panels 303R, 303G, and 303B for respective colors (Hereinafter, a numeral "303" is used when generally referring to the liquid crystal display panel) by a convex lens 302. Each liquid crystal display panel 303 is formed of being provided with an incidence-side polarizer, a panel portion formed by sealing a liquid crystal between a pair of glass plates (in which a pixel electrode and an alignment film are formed), and an exit-side polarizer. Modulated light (image light in respective colors) modulated as a result of passing through the liquid crystal display panels 303R, 303G, and 303B is combined by a dichroic prism 304, and rendered color image light. The color image light is projected by a projection lens 305, and displayed on a screen.

The illuminating device 301, as shown in Figure 23, is formed in such a manner that LEDs 311··· are three-dimensionally arranged in a mirror surface cylinder 312. The mirror surface cylinder 312 is in a shape of a cuboid (parallelepipedon). One surface thereof is a light-exit surface, and inner sides of other surfaces are reflective surfaces. By supporting the LEDs 311··· by one side or both sides of a transparent glass board which is not shown, and arranging the transparent glass boards in layers in the mirror surface cylinder 312, the LEDs 311... are three-dimensionally arranged. It is possible to wire each LEDs 311 on the transparent glasses. The wire portions may be covered by a reflector. In addition, the LEDs 311 except for light-emitting portions may also be covered with the reflector.

Thus, a plurality of LEDs 311··· are three-dimensionally arranged, so that it is possible to increase a light amount. Moreover, the light emitted from the LEDs 311··· is reflected in the mirror surface cylinder 312, integrated, and given off from a light-exit surface, so that it is possible to prevent bright and dark portions corresponding to the arrangement of the LEDs 311··· from being generated on the liquid crystal display panel 303.

In the mirror surface cylinder 312 described above, it is preferable that an aspect ratio of the light-exit surface coincides or approximately coincides with an aspect ratio of the liquid crystal display panel 303. This makes it possible that the light emitted from the LEDs 311 is guided onto the entire surface of the liquid crystal panel 303 without being wasted, so that the utilization efficiency of light is increased.

Moreover, the above-described mirror surface cylinder 312 may be formed in a tapered shape, and an area of the light-exit surface may be larger than that of a surface opposite to the light-exit surface. This makes it possible to restrain light divergence and irradiate the liquid crystal display 303 with the light.

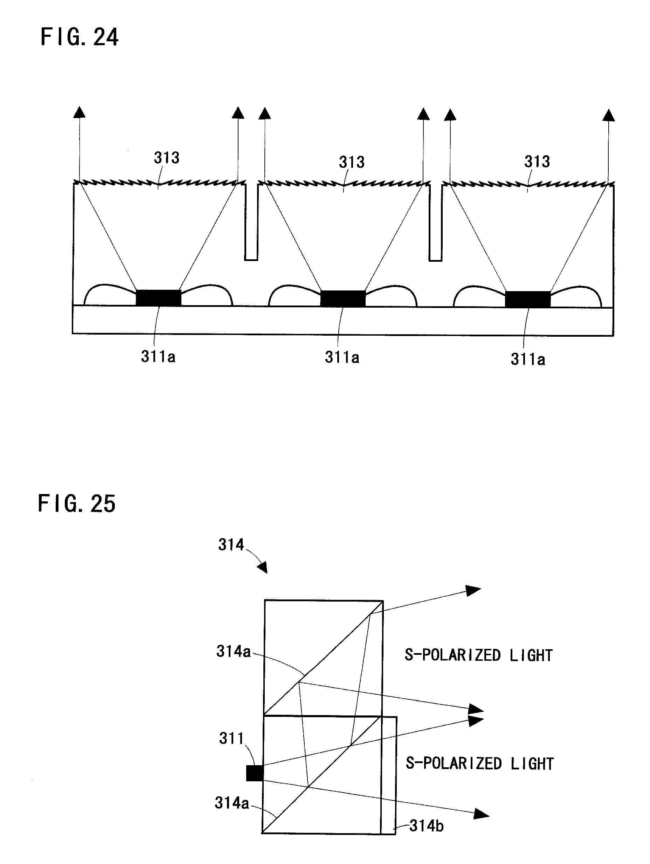

Figure 24 illustrates another illuminating device. The illuminating device is formed in such a manner that LED chips 311 a are arranged in an array shape and diffraction grating cells 313··· for collimating light on the light-emission side of each LED chip 311a. Thus, the LED chips 311a··· are arranged in the array shape, so that it is possible to increase a light amount. The LED chips 311a··· are molded by a transparent resin, and as a result of a surface of the transparent resin being formed in a concave and convex shape, the diffraction grating cells 313··· are formed. The diffraction grating cells 313 are arranged separately from one another in such a manner as to have wall surfaces. It is possible to obtain the wall surfaces by arranging formed members at portions which later serve as the wall surfaces when molding the transparent resin, and removing the formed members after the molding. The wall surfaces become reflective surfaces, so that it is possible to improve utilization efficiency of light. Moreover, the light emitted from the LED chips 311 a are collimated by the diffraction grating cells 313..., and it is possible to efficiently utilize even the light which will not be efficiently utilized (the light guided to portions outside an optical path) if a normal lens is used, so that the utilization efficiency of light is improved. It is noted that other members serving as diffraction grating surfaces may be pasted after molding. In addition, although not shown, an integrator formed of a first fly's eye lens and a second fly's eye lens, for example, may be provided on a light-exit side of the diffraction grating cell 313. The diffraction grating surface may be allowed to have a condensing function. This enables the diffraction grating surface to serve also as the first fly's eye lens. As a result, it is possible to reduce the number of components.

Instead of the diffraction grating surface, a hologram surface may be formed. The wall surface on which the diffraction grating surface or the hologram surface are formed may be an inclined surface so as to easily obtain collimated light or condensed light. Furthermore, it may be configured that both a lens portion formed by a curved surface and the diffraction grating surface or the hologram surface are provided. In addition, the diffraction grating surface or the hologram surface may be provided in molded LED lamps which are already assembled, and the LED lamp may be arranged in an array shape. Moreover, the illuminating device shown in Figure 24 may be arranged as the LED 311 of the illuminating device 301 shown in Figure 23.

Figure 25 illustrates another illuminating device. In the illuminating device, a polarization conversion system 314 is provided on a light-emission portion of the LED 311. The polarization conversion system 314 is structured of a pair of polarizing beam splitters (Hereinafter referred to as a PBS). Each PBS is provided with a polarized light separating surface 314a. In addition, a retardation plate (1/2 λ plate) 314b is provided on a light-exit side of one of the pair of PBSs. The polarized light separating surface 314a of the PBS transmits P-polarized light, for example, out of light emitted from the LED 311, and changes an optical path of S-polarized light by 90 degrees. The S-polarized light having the optical path changed is reflected by an adjacent polarized light separating surface 314a and given off as it is. On the other hand, the P-polarized light that passes through the polarized light separating surface 314a is converted into the S-polarized light by the retardation plate 314b provided on a front side (light-exit side) of the polarized light separating surface, and given off therefrom. That is, approximately all the light is converted into the S-polarized light. Thus, as a result of polarization directions being redirected into a common direction, it is possible to improve brightness on a screen in the projection type video display using the liquid crystal display panel 303. It is noted that one LED 311 is provided for one polarization conversion system 314, and however, a plurality of LEDs 311 may be provided for one polarization conversion system 314. Furthermore, the illuminating device shown in Figure 25 may be arranged as the LED 311 of the illuminating device 301. In this case, a reflector (reflecting surface) may be provided on a surface other than a light-incidence surface on which light is incident from the LED 311 and a polarized light-exit surface in order to prevent unnecessary light from being incident onto the polarization conversion system 314.

It is noted that, in the projection type video display according to the embodiment 4, a reflection type liquid crystal display panel may be used, in addition to a transmission type, or a display panel of a type in which micro mirrors serving as pixels are individually driven, and the like, may be used instead of these liquid crystal display panels. Furthermore, although the projection type video display is provided with three illuminating devices 301R, 301G, and 301B which emit light in respective colors, an illuminating device that emits light in white is used, and the light in white may be separated by a dichroic mirror and the like. Or, the illuminating device that emits light in white is used, and the light in white may be guided to a single-panel color display panel without being separated. In a case of using the illuminating device that emits the light in white, it may be configured that each solid light-emitting element emits the light in white, or solid light-emitting elements which emit light in red, light in green, or light in blue are properly arranged. Moreover, the solid light-emitting elements are not limited to the light-emitting diode (LED).

As described above, according to the invention of the embodiment 4, there is an effect that it is possible to provide a practical illuminating device using solid light-emitting elements such as light-emitting diodes, and the like, and a projection type video display using such the illuminating device.

## Claims

1. An illuminating device, comprising:
a light source in which solid light-emitting elements are arranged in an array shape; and
an integrating means for integrating and guiding light emitted from each solid light-emitting element to an object to be illuminated.

2. An illuminating device according to claim 1, wherein lens cells are arranged on a light-emission side of respective solid light-emitting elements.

3. An illuminating device according to claim 2, wherein said lens cells are integrally molded by a resin that molds respective solid light-emitting elements, or are formed independently of said molding resin, and have a layer of resin interposed between the lens cells and the molding resin.

4. An illuminating device according to claim 2 or 3, wherein
said lens cells are arranged separately from one another in such a manner as to have wall surfaces, and said wall surfaces serve as reflective surfaces.

5. An illuminating device according to claim 4, wherein a reflector is interposed in each of said wall surfaces arranged separately between the lens cells.

6. An illuminating device according to any one of claims 2 to 5, wherein said integrating means is formed of a first lens cluster that receives and condenses light and a second lens cluster provided on condensing points, and said lens cells are configured to guide light emitted from the solid light-emitting elements to said first lens cluster.

7. An illuminating device according to claim 6, wherein said lens cells and said first lens cluster are adhered to each other.

8. An illuminating device according to any one of claims 2 to 5, wherein
said lens cells are configured to condense the light from the solid light-emitting elements, and said integrating means is formed to be provided with a lens cluster arranged on condensing points of light passed through said lens cells.

9. An illuminating device according to any one of claims 6 to 8, wherein each of the solid light-emitting elements, each of the lens cells, and each of the lenses in the lens cluster correspond to one another.

10. An illuminating device according to any one of claims 6 to 9, wherein
a polarization conversion system in which polarizing beam splitters are arranged in an array shape is provided on a light-exit side of said integrating means.

11. An illuminating device according to claim 10, wherein
said polarizing beam splitters have a square pole shape, and a longitudinal direction thereof coincides with a longitudinal direction of the solid light-emitting elements.

12. An illuminating device according to any one of claims 2 to 11, wherein an aspect ratio of each lens in the lens clusters in said integrating means coincides or approximately coincides with an aspect ratio of an object to be illuminated.

13. An illuminating device according to any one of claims 2 to 12, wherein an aspect ratio of each of said lens cells coincides or approximately coincides with the aspect ratio of the object to be illuminated.

14. An illuminating device according to any one of claims 1 to 13, wherein an aspect ratio of each solid light-emitting element coincides or approximately coincides with the aspect ratio of the object to be illuminated.

15. An illuminating device according to any one of claims 1 to 11, comprising an anamorphic lens, wherein an aspect ratio of a light flux guided to the anamorphic lens is different from the aspect ratio of the object to be illuminated, and an aspect ratio of the light flux given off from the anamorphic lens coincides or approximately coincides with the aspect ratio of the object to be illuminated.

16. An illuminating device according to any one of claims 1 to 5, wherein said integrating means is formed of a rod integrator.

17. An illuminating device according to claim 16, wherein an aspect ratio of a light-exit surface of said rod integrator coincides or approximately coincides with an aspect ratio of the object to be illuminated.

18. An illuminating device according to claim 16, comprising an anamorphic lens on a side of the light-exit surface of said rod integrator, wherein an aspect ratio of the light-exit surface of said rod integrator is different from an aspect ratio of an object to be illuminated, and an aspect ratio of a light flux given off from the anamorphic lens coincides or approximately coincides with the aspect ratio of the object to be illuminated.

19. An illuminating device, comprising:
a light source formed by arranging a plurality of laser diodes that are solid light-emitting elements;
an integrating means for integrating and guiding light emitted from said laser diodes to an object to be illuminated, and
a phase-shift means for rendering phases of light emitted from said laser diodes non-uniform one another.

20. An illuminating device according to claim 19, wherein the phase-shift means is formed of a plurality of plane-table transparent portions, respectively having different thicknesses and being arranged on respective optical paths of the lights emitted from laser diodes.

21. An illuminating device according to claim 19, wherein the phase-shift means is formed of a plurality of plane-table transparent portions, respectively having different dielectric constants, and being arranged on the respective optical paths of the lights emitted from laser diodes.

22. An illuminating device according to claim 20 or 21, wherein an aspect ratio of said plane-table transparent portion coincides or approximately coincides with the aspect ratio of the object to be illuminated.

23. An illuminating device according to claim 20 or 21, comprising an anamorphic lens, wherein an aspect ratio of a light flux guided to the anamorphic lens is different from the aspect ratio of the object to be illuminated, and an aspect ratio of the light flux given off from the anamorphic lens coincides or approximately coincides with the aspect ratio of the object to be illuminated.

24. An illuminating device according to claim 19, wherein the phase-shift means is a tapered-shaped optical element arranged on an optical path of a laser beam emitted from said laser diode.

25. An illuminating device, comprising:
a light source formed by arranging a plurality of laser diodes that are solid light-emitting elements;
an integrating means for integrating and guiding laser beams emitted from said laser diodes to an object to be illuminated; and
a light diffusing means for diffusing the laser beams emitted from said laser diodes.

26. An illuminating device according to claim 25, wherein the light diffusing means is an optical element having minute unevenness.

27. An illuminating device, comprising:
a light source formed by arranging a plurality of solid light-emitting elements; and
an integrating means for receiving light emitted from each solid light-emitting element, and integrating and guiding each of the lights received at a plurality of portions on a light receiving area to an object to be illuminated.

28. An illuminating device according to claim 27, wherein said integrating means is formed of a lens cluster, and said lens cluster receives light emitted from one solid light-emitting element.

29. An illuminating device according to claim 28, wherein an aspect ratio of each lens in the lens cluster in said integrating means coincides or approximately coincides with the aspect ratio of the object to be illuminated.

30. An illuminating device according to claim 28, comprising an anamorphic lens, wherein an aspect ratio of a light flux guided to the anamorphic is different from the aspect ratio of the object to be illuminated, and an aspect ratio of the light flux given off from the anamorphic lens coincides or approximately coincides with the aspect ratio of the object to be illuminated.

31. An illuminating device, comprising:
a light source formed by arranging a plurality of solid light-emitting elements each of which has different light-emitting intensity distribution; and
an integrating means for integrating and guiding light emitted from each solid light-emitting element to an object to be illuminated.

32. An illuminating device, comprising;
a light source formed by arranging a plurality of solid light-emitting elements;
an intensity distribution conversion means for receiving light emitted from each solid light-emitting element and giving off the light after converting intensity distribution of the light; and
an integrating means for integrating and guiding light given off from each intensity distribution conversion means to an object to be illuminated.

33. An illuminating device, comprising,
a light source formed by arranging a plurality of solid light-emitting elements, and
an integrating means for integrating and guiding light emitted from each solid light-emitting element to an object to be illuminated in respectively different condensing patterns.

34. A projection type video display according to claim 31, wherein solid light-emitting elements of two-point light-emitting are provided.

35. An illuminating device according to any one of claims 25 to 34, comprising laser diodes as the solid light-emitting elements, wherein the object to be illuminated is a liquid crystal display panel, and a linear polarization direction of laser diodes coincides or approximately coincides with a polarization direction of the liquid crystal display panel.

36. An illuminating device according to any one of claims 25 to 35, comprising the laser diodes as the solid light-emitting elements, wherein a longitudinal direction of an elliptical light emitted from the laser diodes coincides or approximately coincides with a longitudinal direction of the object to be illuminated.

37. An illuminating device according to any one of claims 25 to 36, comprising the laser diodes as said solid light-emitting elements, wherein an aspect ratio of an optical element in an optical system that guides the light emitted from the laser diodes to said object to be illuminated coincides or approximately coincides with an aspect ratio of said object to be illuminated, and a longitudinal direction of an elliptical light emitted from said laser diodes coincides or approximately coincides with a longitudinal direction of said optical element.

38. An illuminating device, wherein a plurality of solid light-emitting elements are three-dimensionally arranged in a mirror surface cylinder, one surface of which is a light-exit surface and inner sides of other surfaces of which are reflective surfaces, and light emitted from said solid light-emitting elements is integrated by said reflective surfaces and given off from said light-exit surface.

39. An illuminating device according to claim 38, the mirror surface cylinder is in a shape of a rectangular tubular body.

40. An illuminating device according to claim 39, an aspect ratio of said light-exit surface coincides or approximately coincides with an aspect ratio of an object to be illuminated.

41. An illuminating device according to any one of claims 38 to 40, wherein said mirror surface cylinder is formed in a tapered shape, and an area of the light-exit surface is larger than that of a surface opposite to the light-exit surface.

42. An illuminating device, comprising a diffraction optical element portions having a collimating function or a condensing function on a light-emission side of a solid light-emitting element.

43. An illuminating device, comprising a hologram optical element portion having a collimating function or a condensing function on a light-emission side of a solid light-emitting element.

44. An illuminating device, wherein a plurality of solid light-emitting elements are two-dimensionally or three-dimensionally arranged, and a polarization conversion element is provided on a light-emission side of each solid light-emitting element.

45. An illuminating device according to any one of claims 1 to 44, comprising a transmission type liquid crystal display having no micro lens as an object to be illuminated.

46. A projection type video display, comprising the illuminating device according to any one of claims 1 to 45.
